# EUROPÄISCHE PATENTSCHRIFT

(11) **EP 1 919 693 B1**
(45) Veröffentlichungstag und Bekanntmachung des Hinweises auf die Patenterteilung: **17.12.2008**
(21) Anmeldenummer: 06762662.2
(22) Anmeldetag: 17.07.2006
(51) Int. Cl.: B29C 65/12, C09J 123/08, C08L 31/04

(54) **THERMOPLASTISCHER SCHWEISSDRAHT**
THERMOPLASTIC WELDING ROD
FIL DE SOUDURE THERMOPLASTIQUE

(30) Priorität: 22.07.2005 DE 102005034361
(43) Veröffentlichungstag der Anmeldung: 14.05.2008
(73) Patentinhaber: Armstrong DLW AG, 74321 Bietigheim-Bissingen (DE)
(72) Erfinder: NIENABER, Jörg, 27798 Hude (DE); BURMEISTER, Guido, 27793 Wildeshausen (DE); LORKE, Edwin, 27753 Delmenhorst (DE)
(74) Vertreter: Müller-Boré & Partner Patentanwälte
(86) Internationale Anmeldenummer: PCT/EP2006/007026
(87) Internationale Veröffentlichungsnummer: WO 2007/009733

(56) Entgegenhaltungen:
- GB-A- 2 322 097
- US-B1- 6 765 054
- DATABASE WPI Week 200255 Derwent Publications Ltd., London, GB; AN 2002-512268 XP002407748 -& JP 2002 114877 A (LONSEAL CORP) 16. April 2002 (2002-04-16)
- DATABASE WPI Week 200525 Derwent Publications Ltd., London, GB; AN 2005-236240 XP002407749 -& JP 2005 054001 A (TAKIRON KK) 3. März 2005 (2005-03-03)

## Beschreibung

Die Erfindung betrifft einen thermoplastischen Schweißdraht bzw. eine thermoplastische Schweißschnur zum Verschweißen von flexiblen Flächengebilden wie Boden- oder Wandbelägen, insbesondere zum Verschweißen von Boden- oder Wandbelägen auf Basis von Linoleum.

Thermoplastische Schweißdrähte sind an sich seit langem bekannt und werden in großen Umfang zum Verschweißen von Boden- und Wandbelagsbahnen verwendet. Herkömmliche Schweißdrähte, beispielsweise Schweißdrähte für Linoleumbodenbeläge bestehen aus einem Grundpolymer (Basispolymer), Paraffinwachsen zur Verleihung gewünschter mechanischer Eigenschaften, wie Härte und Kratzfestigkeit und Harzen zur Verleihung der benötigten Klebrigkeit. Aufgrund ihrer Klebrigkeit gewährleisten die Harze nach dem Einbringen in die Klebefuge zwischen den zu verbindenden Bahnen von z.B. Linoleumbodenbelägen eine ausreichende Flankenhaftung, d.h. Haftung bzw. Adhäsion des Schweißdrahtmaterials an den Schnittkanten bzw. Flanken der miteinander zu verbindenden Bahnen. Die Klebrigkeit des Schweißdrahts und damit auch der mit seiner Hilfe hergestellten Klebeverbindung, d.h. der Schweißnaht führt jedoch zu dem Nachteil, dass die Schweißdrahtoberfläche und damit auch die Oberfläche der Schweißnaht eine hohe Anschmutzneigung zeigt. Diese Anschmutzung der Schweißnaht führt nach kurzer Zeit zu einer optischen Beeinträchtigung des Bodenbelags, was eine Reinigung des Bodenbelags und insbesondere der Schweißnaht in sehr kurzen Zeitabständen erforderlich macht. Oftmals läßt sich der Schmutz in den Klebefugen nicht vollständig entfernen oder zumindest nur mit einem erheblichen Aufwand.

Die Druckschrift JP-A-2002 114877 offenbart einen Ethylen-Vinylacetat-Copolymer und Wachs enthaltenden Schweißdraht.

Es ist daher eine Aufgabe der vorliegenden Erfindung, einen thermoplastischen Schweißdraht bereitzustellen, der die Nachteile des Standes der Technik nicht aufweist, also insbesondere eine deutlich verringerte Anschmutzneigung zeigt und der trotzdem die guten Eigenschaften herkömmlicher Schweißdrähte im Hinblick auf eine zuverlässige und dichte Verbindung der zu verbindenden flexiblen Beläge und eine einfache Handhabung beibehält.

Diese Aufgabe wird durch den in Anspruch 1 definierten Schweißdraht gelöst. Vorteilhafte Weiterbildungen des erfindungsgemäßen Schweißdrahts sind in den Unteransprüchen näher erläutert.

Der erfindungsgemäße thermoplastische Schweißdraht zum Verschweißen von flexiblen Flächengebilden wie Boden- oder Wandbelägen aller Art, insbesondere von Linoleum-Boden- oder Wandbelägen umfasst mindestens ein Polymer auf Basis eines Ethylen-Vinylacetat-(EVA)-Copolymers und mindestens ein Wachs, vorzugsweise ein natürliches Wachs. Der erfindungsgemäße thermoplastische Schweißdraht verzichtet auf die herkömmlicherweise zur Gewährleistung einer ausreichenden Klebrigkeit eingesetzten klebrigmachenden Harze und verwendet stattdessen mindestens ein Polymer auf Basis eines Ethylen-Vinylacetat-Copolymers, welches im eigentlichen Sinn ein Grundpolymer bzw. Basispolymer ist. Es ist dabei jedoch erfindungsgemäß darauf zu achten, daß das oder die Polymer(e) auf Basis eines Ethylen-Vinylacetat-Copolymers einen bestimmten, hohen Schmelzindex, wie nachstehend angegeben, aufweist und auch darauf, daß der resultierende thermoplastische Schweißdraht ebenfalls einen bestimmten, hohen Schmelzindex, wie ebenfalls nachstehend angegeben, aufweist.

Darüber hinaus weist der erfindungsgemäße thermoplastische Schweißdraht einen sehr hohen Anteil von 25 Gew.-% bis 60 Gew.-%, bezogen auf die Gesamtmenge aus dem mindestens einen Polymer auf Basis eines Ethylen-Vinylacetat-Copolymers und dem mindestens einen Wachs, an dem mindestens einen Wachs auf.

Durch die vorgenannten Maßnahmen wird die Anschmutzneigung der Schweißnaht deutlich herabgesetzt, wobei der erfindungsgemäße Schweißdraht dennoch eine dauerhafte und dichte Schweißverbindung gewährleistet. In weiteren Ausgestaltungen weist der erfindungsgemäße Schweißdraht Schellack oder eine Ummantelung aus mindestens einem Schmelzkleber auf.

Genauer umfasst der erfindungsgemäße thermoplastische Schweißdraht mindestens ein Polymer auf Basis eines EVA-Copolymers mit einem sehr hohen Schmelzindex und mindestens ein natürliches Wachs zur Verleihung von Härte und Kratzfestigkeit der hergestellten Schweißnaht. Der gegebenenfalls vorhandene Schellack oder die gegebenenfalls vorhandene Ummantelung aus mindestens einem Schmelzkleber, vorzugsweise auf Polyamid-Basis, dienen der Verbesserung der Kohäsion der Schweißnaht und deren Flankenhaftung, d.h. der Adhäsion an den Rändern der zu verbindenden Belagsbahnen. ln vielen Fällen ist ein erfindungsgemäßer Schweißdraht, der als konstituierende Komponenten mindestens ein Polymer auf Basis eines EVA-Copolymers und mindestens ein Wachs umfasst, ausreichend, um eine dauerhafte und dichte Schweißnaht zu gewährleisten. So können flexible Flächengebilde, z.B. Bodenbeläge auf Basis synthetischer Materialien wie Polyvinylchlorid (PVC), Ethylen-Vinylacetat (EVA), Alkylacrylat und dergleichen, qualitativ hochwertig mit diesem Schweißdraht verschweißt werden.

Sofern die Flankenhaftung des lediglich mindestens ein Polymer auf Basis eines EVA-Copolymers und mindestens ein Wachs als konstituierende Komponenten umfassenden Schweißdrahts an den Rändern bzw. Flanken der zu verbindenden Bahnen nicht ausreichend hoch ist, kann der erfindungsgemäße Schweißdraht folgende besondere Ausführungsformen aufweisen:
a) Der Schweißdrahtrezeptur, die als konstituierende Komponenten mindestens ein Polymer auf Basis eines EVA-Copolymers und mindestens ein Wachs umfaßt, wird Schellack zugegeben, der in geschmolzenem Zustand eine haftvermittelnde Wirkung aufweist, wobei die Haftverbesserung auch nach dem Abkühlen und damit Erstarren des Schweißdrahts erhalten bleibt, ohne daß die Polarität und das Anschmutzverhalten der Schweißnahtoberfläche verändert werden.
b) Der Schweißdraht ist mit einer Ummantelung aus mindestens einem Schmelzkleber versehen, wobei der mindestens eine Schmelzkleber ebenfalls einen sehr hohen Schmelzindex aufweist. Dies ist besonders vorteilhaft bei flexiblen Flächengebilden aus einem mehr oder weniger porösen Material, insbesondere bei Belägen auf Linoleum-Basis. Aufgrund des hohen Schmelzindexes des bzw. der im erfindungsgemäßen Schweißdraht eingesetzten EVA-Copolymers bzw. EVA-Copolymere und der daraus sich ergebenden niedrigen Viskosität der Schmelze, dringt diese Schmelze sehr leicht in die Poren und Hohlräume in den Schnittkanten (Flanken) der zu verbindenden Bahnen ein. Zwar wird das eingedrungene Schweißdrahtmaterial nach dem Abkühlen in den Poren und Hohlräumen festgehalten, doch kann es vorkommen, dass die Kohäsion des Schweißdrahts, der neben dem bzw. den EVA-Copolymer(en) erhebliche Anteile an Wachs enthält, nicht ausreicht, die notwendige Flankenhaftung des Schweißdrahts an der porösen und damit rauhen Oberfläche der Kanten der zu verbindenden Belagsbahnen, die keine regelmäßige und glatte Kontaktfläche bildet, zu gewährleisten.

In diesem Fall führt der Zusatz von Schellack als kohäsionsverstärkendem Haftvermittler zu dem Schweißdraht zu einer Erhöhung der Flankenhaftung, da der Schellack im aufgeschmolzenen Zustand zu einer verbesserten Haftung der geschmolzenen Schweißdrahtmasse an den Flanken der zu verbindenden Bahnen führt, wobei diese verbesserte Haftung auch nach dem Abkühlen der Schweißnaht erhalten bleibt, ohne zu einer erhöhten Anschmutzneigung der Schweißnaht wegen des Zusatzes an Schellack zu führen. In herkömmlichen Schweißdrähten verwendete Kohlenwasserstoffharze zur Erhöhung der Klebrigkeit, weisen ein derartiges Verhalten nicht auf.

Sollte die gewünschte Anhaftung an den Flanken der zu verbindenden Bahnen nicht erreicht werden, kann alternativ zu der Zugabe von Schellack zu der Schweißdrahtrezeptur der erfindungsgemäße thermoplastische Schweißdraht mit einer Ummantelung aus mindestens einem Schmelzkleber versehen werden. Diese Ummantelung führt zu einer deutlichen Verbesserung der Flankenhaftung, da beim Aufschmelzen des in die Bahnenfuge eingebrachten Schweißdrahts im Wesentlichen nur der Schmelzkleber in die Poren der Flanken der Belagsbahnen eindringt und somit nach dem Abkühlen eine in den Poren und Hohlräumen verankerte, relativ glatte Oberfläche (Kontaktfläche) bildet, die mit dem Schweißdrahtkern eine sehr stabile flächige Klebeverbindung eingeht. Die Verbesserung der Flankenhaftung ist wohl auch darauf zurückzuführen, dass der wachsfreie Schmelzkleber der Ummantelung eine höhere Kohäsion aufweist, als der Schweißdrahtkern.

Die gegebenenfalls auf dem erfindungsgemäßen Schweißdraht vorhandene Ummantelung aus mindestens einem Schmelzkleber ist in einer sehr dünnen Schicht ausgebildet. Die Dicke der Ummantelung liegt im Bereich von 0,05 mm bis 0,3 mm, vorzugsweise im Bereich von 0,1 mm bis 0,2 mm.

Der erfindungsgemäße thermoplastische Schweißdraht kann in üblicher Weise verarbeitet werden, beispielsweise in der Weise, dass der Schweißdraht in die zwischen den zu verbindenden Bahnen gebildete Fuge eingebracht und durch Erwärmen, beispielsweise mit einem Heißtuftgerät in den fließfähigen Zustand gebracht wird. Der flüssige bzw. fließfähige Schweißdraht füllt dann die Trennfuge der Belagsbahnen vollständig aus. Nach dem Abkühlen wird der überstehende Teil des Schweißdrahts in herkömmlicher Weise, z.B. mit Hilfe eines Messers planparallel zur Oberfläche der verbundenen Belagsbahnen entfernt.

Bei der Ausführungsform des erfindungsgemäßen Schweißdrahts, die eine Schmelzkleber-Ummantelung aufweist, führt die Anwesenheit eines Schmelzklebers in der Schweißnaht wegen der geringen Schichtdicke der Schmelzkleber-Ummantelung nicht zu einer merklichen Verschlechterung des Anschmutzverhaltens. Wird der nach dem Einbringen des Schweißdrahts in die Bahnenfuge und nach dessen Aufschmelzen und anschließendem Abkühlen zurückbleibende, erhabene Teil der Schweißnaht beispielsweise in der vorstehend beschriebenen Weise mit einem Messer entfernt, ergeben sich nur äußerst schmale und praktisch nicht sichtbare Bereiche aus Schmelzkeber an der Oberfläche der Schweißnaht entlang der Ränder der zu verbindenden Belagsbahnen im Übergang zu der Oberfläche der Schweißnaht, wobei die Schweißnaht fast vollständig aus dem anschmutzungsunempfindlichen Schweißdrahtkern gebildet ist.

Da alle der vorstehend genannten polymeren Bestandteile des erfindungsgemäßen Schweißdrahts eine sehr niedrige Schmelzviskosität (d.h. einen sehr hohen Schmelzindex) besitzen, und das mindestens eine eingesetzte Wachs naturgemäß zu einer äußerst niedrigviskosen Schmelze führt, ist der geschmolzene Schweißdraht in der Lage, in die Mikroporen der Belagsbahnen, insbesondere im Falle von Linoleumbelagsbahnen einzudringen bzw. in diese hineinzufließen. Sobald das geschmolzene Material des Schweißdrahts durch Abkühlung verfestigt ist, gewährleistet es eine Verbindung der Belagsbahnen mit sehr hoher Flankenhaftung und gleichzeitig ausgezeichneter Dichtigkeit der Klebefuge. Bei Schmelzkleberummantelten Ausführungsformen des erfindungsgemäßen Schweißdrahts ist dies jedenfalls auch bei porösen Bahnenmaterialien wie insbesondere Linoleum gewährleistet. Es hat sich im Rahmen der vorliegenden Erfindung gezeigt, dass aufgrund der Tatsache, dass der erfindungsgemäße Schweißdraht im üblichen Sinne keine klebende Komponente enthält, die Anschmutzneigung des Schweißdrahts und damit auch der daraus resultierenden Schweißnaht ohne Qualitätseinbuße der Nahtverbindung erheblich vermindert ist bzw. sich nicht mehr oder allenfalls nur noch unwesentlich von der Anschmutzneigung der Belagsbahnen selbst unterscheidet. Es ist in vielen Fällen sogar möglich, die Anschmutzneigung der Schweißnaht im Vergleich zu den zu verbindenden Belagsbahnen noch herabzusetzen.

Auf dem Gebiet der Boden- und Wandbeläge, insbesondere der Bodenbeläge wird der Belag üblicherweise mit einem sogenannten Finish versehen. Ein Finish ist eine Beschichtung, welche eine Schutzschicht für den Bodenbelag darstellt und seine Gebrauchseigenschaften verbessert, z.B. eine vorzeitige Abnutzung der Nutzschicht des Bodenbelags verhindert bzw. vermindert. Häufig verwendete Finishs sind auf Basis von Polyurethan (PUR)- oder Acrylat- Homopolymeren oder deren Copolymeren untereinander gebildet. Diese Finishs können bei der Reinigung und Pflege des Bodenbelags relativ leicht wieder entfernt und gewünschtenfalls erneuert werden.

Zunehmend werden Bodenbeläge, auch Linoleumbodenbeläge mit einem vorgenannten Finish versehen, das mittels z.B. UV-Strahlen vernetzt werden kann und danach eine äußerst widerstandsfähige und strapazierfähige Schutzschicht bildet, die dann allerdings auch nur noch mit einem erheblichen mechanischen Aufwand wieder entfernt werden kann. Bei Verschweißung derartiger, ein Finish aus z.B. vernetztem PUR aufweisender Bodenbeläge mit einem herkömmlichen Schweißdraht treten in der Praxis häufig Probleme hinsichtlich einer erhöhten Anschmutzneigung der Schweißnaht auf, da keine Schutzschicht durch eine sonst übliche Einpflegung auf der Schweißnaht vorhanden ist. Es hat sich im Rahmen der vorliegenden Erfindung ebenfalls erwiesen, dass der erfindungsgemäße Schweißdraht, insbesondere der mit einer Schmelzkleber-Ummantelung versehene Schweißdraht hervorragend geeignet ist, Bahnen aus sog. PUR-Linoleum, d.h. Linoleum, welches mit einem Finish aus vernetztem PUR beschichtet ist, zu verschweißen. Der erfindungsgemäße Schweißdraht kann allgemein zum Verschweißen von flexiblen Boden- und Wandbelägen unterschiedlichster Materialien, einschließlich natürlicher und synthetischer Herkunft verwendet werden.

Das in dem erfindungsgemäßen Schweißdraht verwendete EVA-Copolymer ist in seiner Art und seiner Zusammensetzung hinsichtlich des Anteils und der Anordnung der Monomeren in der Molekülkette nicht besonders beschränkt. Bevorzugt werden jedoch EVA-Copolymere, die einen Vinylacetat-Gehalt von 15 Gew.-% bis 35 Gew.-% und dementsprechend einen Ethylengehalt von 85 Gew.-% bis 65 Gew.-%, bezogen auf das Gesamtgewicht des EVA-Copolymers aufweisen. Erfindungsgemäß kann ein einzelnes EVA-Copolymer eingesetzt werden, aber auch ein Gemisch von zwei oder mehr EVA-Copolymeren.

Wie vorstehend erwähnt ist es für die Eignung des EVA-Copolymeren entscheidend, dass es einen sehr hohen Schmelzindex aufweist. Der Schmelzindex liegt im Rahmen der vorliegenden Erfindung im Bereich von 100g/10min bis 830g/10min, vorzugsweise von 350g/10min bis 550g/10min, gemessen nach ASTM 1238 bei einer Temperatur von 125°C und einer Last von 325g.

Als Wachs für den erfindungsgemäßen Schweißdraht kommt grundsätzlich jedes Wachs in Frage, also jedes natürliche pflanzliche Wachs, tierische Wachs und Mineralwachs, aber auch chemisch veränderte Wachse und synthetische Wachse, sofern es dem Schweißdraht und insbesondere der aus diesem hergestellten Schweißnaht eine ausreichende Härte und Kratzfestigkeit verleiht. Wachse sind u.a. dadurch gekennzeichnet, dass sie bei Raumtemperatur im Allgemeinen fest bis brüchig hart sind, aber schon wenig oberhalb ihres Schmelzpunkts niedrigviskose Flüssigkeiten darstellen. Nicht zuletzt aus Gründen der Verfügbarkeit und Erneuerbarkeit als nachwachsende Rohstoffe, als auch unter Umweltsgesichtspunkten sind natürliche Wachse bevorzugt. Als Beispiele derartiger natürlicher Wachse seien Candelillawachs, Japanwachs, Carnaubawachs, Montanwachs, Bienenwachs, Schellackwachs, Lanolin, Ceresin, Ozokerit, Petrolatum, Paraffinwachse und Mikrowachse erwähnt. Bevorzugt sind dabei Carnaubawachs, Bienenwachs und Schellackwachs und besonders bevorzugt ist Carnaubawachs.

Sofern dem erfindungsgemäßen Schweißdraht Schellack zugegeben wird, kann eine unentwachste Type verwendet werden, welche naturgemäß einen Anteil an natürlichem Wachs mit einbringt.

Der in dem erfindungsgemäßen Schweißdraht verwendete Schmelzkleber unterliegt grundsätzlich keiner besonderen Einschränkung und es können übliche Schmelzkleber wie Schmelzkleber auf Basis von EVA, Polyisobutylen (PIB), Polyvinylbutyral (PVB) und Polyamid (PA) eingesetzt werden, sofern ihr Schmelzindex einen Wert von mindestens 200g/10min und nicht mehr als 400g/10min aufweist. Vorzugsweise beträgt der Schmelzindex höchstens 350g/10min und mehr bevorzugt höchstens 300g/10min, gemessen nach ASTM 1238 bei einer Temperatur von 125°C und einer Last von 325g.

Unter den Schmelzklebern sind solche auf PA-Basis besonders bevorzugt, weil sie zu einer hohen Flankenhaftung führen, nach dem Abkühlen eine im Vergleich mit anderen Schmelzklebern geringe Anschmutzneigung zeigen und der Schweißnaht eine gute Härte und Kratzfestigkeit verleihen.

In dem erfindungsgemäßen Schweißdraht sind die Komponenten EVA-Copolymer und Wachs in bestimmten Mengenverhältnissen vorhanden. Das mindestens eine EVA-Copolymer ist in einer Menge von 40 Gew.-% bis 75 Gew.-%, vorzugsweise von 55 Gew.-% bis 65 Gew.-%, bezogen auf die Gesamtmenge aus EVA-Copolymer und Wachs vorhanden.

Der in einer Ausführungsform des erfindungsgemäßen Schweißdrahts als Haftvermittler eingesetzte Schellack zeigt beim Verarbeiten des Schweißdrahts bei üblichen Verarbeitungstemperaturen eine Teilpolymerisation bzw. Vernetzung, welche die Produkteigenschaften der resultierenden Schweißnaht aufgrund der zusätzlichen Härtung der Oberfläche der Schweißnaht und einer damit einhergehenden weiteren Herabsetzung der Anschmutzneigung verbessert.

Der Schellack kann dem erfindungsgemäßen thermoplastischen Schweißdraht in einer Menge von 5 Gew.-% bis 15 Gew.-%, vorzugsweise etwa 10 Gew.-%, bezogen auf die Gesamtmenge aus dem mindestens einen Polymer auf Basis eines EVA-Copolymers und dem mindesten einen Wachs, zugegeben werden.

Wie erwähnt, besitzen alle der den erfindungsgemäßen Schweißdraht konstituierenden Komponenten (d.h. das oder die EVA-Copolymer(e) und gegebenenfalls der oder die Schmelzkleber) einen sehr hohen Schmelzindex, wobei das oder die eingesetzte(n) Wachs(e) naturgemäß eine sehr niedrige Schmelzviskosität besitzen, und dementsprechend weist auch der aus ihnen hergestellte Schweißdraht insgesamt einen hohen Schmelzindex auf, der im Bereich von 2g/10min bis 150g/10min liegt, vorzugsweise im Bereich von 4g/10min bis 70g/10min, gemessen nach ASTM 1238 bei einer Temperatur von 80°C und einer Last von 15kg. Die Einhaltung des Schmelzindexes des Schweißdrahts ist von erheblicher Bedeutung, da anderenfalls die günstigen Eigenschaften des Schweißdrahts beeinträchtigt werden können.

Der erfindungsgemäße Schweißdraht kann neben den vorgenannten konstituierenden Komponenten weitere Inhaltsstoffe aufweisen, wie beispielsweise übliche Verarbeitungshilfsmittel, UV-Stabilisatoren, Antioxidanzien, Füllstoffe, Pigmente, Farbstoffe etc., solange die geforderten Eigenschaften hinsichtlich Schmelz- und Fließverhalten, Adhäsion, Kohäsion und geringe Anschmutzneigung nicht beeinträchtigt werden.

Insbesondere kann der Schweißdraht gefärbt sein, um sich optisch an die Farbe der zu verbindenden Belagsbahnen anzupassen. Dabei kann der Schweißdraht durch Zugabe von Farbstoff(en) und/oder Pigment(en) einfarbig ausgebildet werden, er kann jedoch auch mehrfarbig sein und auch jegliches gewünschte Muster aufweisen, je nachdem wie er zu dem farbigen und/oder gemusterten Belag passen soll. Die Einfärbung des Schweißdrahts kann in an sich bekannter Weise erfolgen und unterliegt keiner besonderen Beschränkung. Beispielsweise können ein oder mehrere Farbstoffe und/oder Pigmente der Ausgangsmischung der Komponenten für den Schweißdraht zugegeben werden und diese Mischung dann in üblicher Weise, z.B. durch Schmelzen und Extrudieren in die Form des gewünschten Schweißdrahts gebracht werden. Sofern der Schweißdraht mehrfarbig gemustert sein soll, können beispielsweise unterschiedlich gefärbte Granulate aus den Komponenten für den Schweißdraht hergestellt werden und anschließend wird ein Gemisch aus mindestens zwei unterschiedlich gefärbten Granulaten in die Form des gewünschten Schweißdrahts gebracht. Daneben kann auch jede andere Art der Mustergebung angewendet werden. Sofern der Schweißdraht eine Schmelzkleber-Ummantelung aufweist, ist diese Ummantelung vorzugsweise entweder transparent oder, wie vorstehend beschrieben, ein- oder mehrfarbig eingefärbt oder gemustert.

Der Schweißdraht kann jede äußere Form besitzen, weist jedoch vorzugsweise einen kreisförmigen oder ovalen Querschnitt auf. Der Durchmesser eines Schweißdrahts mit kreisförmigem Querschnitt beträgt im Allgemeinen etwa 2 bis etwa 6 mm, vorzugsweise etwa 3 bis etwa 5 mm und mehr bevorzugt etwa 4 mm.

Sofern der erfindungsgemäße Schweißdraht eine Schmelzkleber-Ummantelung aufweist, schließen die vorgenannten Bereiche für den Durchmesser des Schweißdrahts die Schichtdicke der Ummantelung ein.

Mit der vorliegenden Erfindung wird ein thermoplastischer Schweißdraht zum Verbinden bzw. Verschweißen von flexiblen Flächengebilden, insbesondere von Boden- und Wandbelägen zur Verfügung gestellt, der in der Lage ist, die Belagsbahnen auf einfache Weise zuverlässig, dauerhaft und dicht zu verbinden und der zu einer Schweißnaht führt, die eine wesentlich geringere Anschmutzneigung besitzt, als herkömmliche Schweißdrähte. Der erfindungsgemäße Schweißdraht ist auch hervorragend und vorallem zum Verschweißen von Linoleum-Boden- und Wandbelägen geeignet. Dabei kann es sich auch um einen Linoleum-Boden- oder Wandbelag handeln, der ein Finish aufweist, beispielsweise ein Finish auf Acrylat- oder Polyurethan-Basis, einschließlich sog. irreversibler, d.h. vernetzter PUR-Finishs.

Aufgrund der verringerten Anschmutzneigung des Schweißdrahts und der daraus resultierenden Schweißnaht ist eine deutliche Qualitätsverbesserung des Boden-oder Wandbelags zu verzeichnen, da sich die Anzahl der notwendigen Reinigungsarbeiten des Belags verringert, d.h., die Zeitintervalle zwischen den Reinigungs- und gegebenenfall Polierarbeiten wird erheblich verlängert.

Ferner weist der erfindungsgemäße Schweißdraht einen höheren Anteil an natürlichen Ausgangsmaterialien auf und befindet sich damit, insbesondere bei einer Anwendung zum Verschweißen von Linoleum-Bodenbelägen in größerer Übereinstimmung mit dem stets stärker werdenden Umweltbewusstsein.

Die vorliegende Erfindung wird durch das nachstehende Beispiel, welches keinesfalls beschränkend ist, weiter erläutert. Prozentangaben beziehen sich dabei auf das Gewicht, sofern nichts anderes angegeben ist.

### Beispiel

Aus den in der folgenden Tabelle angegebenen Komponenten in den ebenfalls angegebenen Mengen wurde ein erfindungsgemäßer Schweißdraht hergestellt.

| Nr. | Komponente | Konzentration (Gew.-%) bezogen auf die Gesamtmischung nach Pigmentzugabe | Hersteller | Bernerkungen |
|---|---|---|---|---|
| 1 | Carnaubawachs | 33,9 | Kahl & Co Vertriebsges.mbH, Trittau | |
| 2 | Escorene ® (EVA-Copolymer mit einem Vinylacetat-Gehalt von 19 Gew.-%) | 62,9 | Exxon Mobil Chemical Company | |
| 3 | Markscreen ® (oligomeres, sterisch gehindertes Phenol) | 0,2 | Crompton Vinyl Additives GmbH | thermisches Antioxidans |
| 4 | Pigmentmischung anorganischer und/oder organischer Pigmente | 3,0 | verschiedene | |

### Herstellungsverfahren

Die Rezeptbestandteile 1 + 2 wurden aufgeschmolzen und dem Einlauf eines handelsüblichen Zweiwellenextruders zugeführt. Unmittelbar danach wurde das Pigment / Antioxidans-Gemisch über eine automatische Zudosierung ebenfalls in den Extruder eingebracht und im weiteren homogen in die Schmelze eingearbeitet.

Das gesamte Verfahrensteil blieb hierbei ungeheizt und die Kopftemperatur des Extruders wurde auf 85°C eingestellt.

Der entstehende runde Strang mit einem Durchmesser von 4mm durchlief zur vollständigen Erstarrung ein Wasserbad und wurde hiernach aufgespult.

Verarbeitung

Eine ausreichende Menge des Materials wurde in eine ausgefräste Bodenbelagsfuge folgendermaßen eingebracht:
1. Einbringung des Schweißdrahtes mittels eines Heißlufthandschweißgeräts und aufgesetzter Schweißdüse mit einem Durchmesser von 4mm bei 350-400°C in die Bodenbelagsfuge;
2. Abstoßen des überstehenden Materials kurz oberhalb der Bodenbelagsoberfläche mit Hilfe eines handelsüblichen Messerschlittens; und
3. Planparalleles Abstoßen der Schweißnaht.

### Untersuchungsergebnisse

Die Anschmutzneigung des erfindungsgemäßen Schweißdrahts im Vergleich zu einem herkömmlichen Schweißdraht wurde auf folgende Weise untersucht:

Die Untersuchung wurde in Anlehnung an die DIN EN 660-1 durchgeführt, wobei ein Testschmutz nach DIN EN 1269 verwendet wurde. Zur Probenvorbereitung wurde aus dem Material des Schweißdrahts ein quadratischer Prüfling mit einer Kantenlänge von 190mm hergestellt und dieser mit einem doppelseitigen Klebeband auf einer Leichtmetaliplatte verklebt. Dieser Prüfling wird als Standardprobe bezeichnet und zum Vergleich mit einer im folgenden Anschmutztest verschmutzten Probe herangezogen.

Für den Anschmutztest wird ein weiterer Prüfling mindestens 24h im Normklima gemäß DIN 50014-23/50-2 gelagert.

Die Prüfung zur Bestimmung der Anschmutzneigung wird wie folgt durchgeführt:
- 3g des vorgenannten Testschmutzes werden auf den Prüfling aufgebracht;
- das Lastpendel wird abgesenkt;
- es werden 50 Doppelwalkhübe ausgeführt;
- der Prüfling wird ausgespannt und der Testschmutz wird mit Staubsauger und Bürste entfernt;
- der Prüfling wird halbseitig mit Wasser und Scheuermilch gereinigt;
- die Anschmutzung wird beurteilt.

Zur Beurteilung der Anschmutzung, die sich in einer Farbänderung ausdrückt, wird diese Farbänderung mit Hilfe des Graumaßstabes gemäß DIN EN 20105-A02 bewertet, wobei die halbseitig mit Wasser und Scheuermilch gereinigte Seite des angeschmutzten Prüflings mit der (unverschmutzten) Standardprobe verglichen wird. Die Bewertung erfolgt in 5 Stufen, wobei Stufe 1 die stärkste Farbänderung (Anschmutzung) bedeutet und Stufe 5 keine Farbänderung anzeigt.

Der aus dem Material des erfindungsgemäßen Schweißdrahts hergestellte Prüfling wurde in dem vorstehend beschriebenen Anschmutzungstest mit Stufe 3 bewertet. Ein aus dem Material eines herkömmlichen Schweißdrahts für elastische Bodenbeläge hergestellter Prüfling wurde hingegen mit Stufe 2 bewertet, was bedeutet, daß dieser Prüfling eine deutlich höhere Neigung zur Anschmutzung zeigt, als ein aus dem Material für einen erfindungsgemäßen Schweißdraht hergestellter Prüfling.

## Patentansprüche

1. Thermoplastischer Schweißdraht zum Verschweißen von flexiblen Flächengebilden, umfassend mindestens ein Polymer auf Basis eines Ethylen-Vinylacetat-Copolymers und mindestens ein Wachs, wobei das mindestens eine Polymer auf Basis eines Ethylen-Vinylacetat-Copolymers in einer Menge von 40 Gew.-% bis 75 Ges.-%; bezogen auf die Gesamtmenge aus dem mindestens einen Polymer auf Basis eines Ethylen-Vinylacetat-Copolymers und dem mindestens einen Wachs in dem Schweißdraht vorhanden ist, und wobei der Schweißdraht einen Schmelzindex von 2g/10min bis 150g/10min, gemessen nach ASTM 1238 bei einer Temperatur von 80°C und einer Last von 15kg, aufweist.

2. Schweißdraht nach Anspruch 1, wobei das mindestens eine Polymer auf Basis eines Ethylen-Vinylacetat-Copolymers einen Schmelzindex von 100g/10min bis 830g/10min, gemessen nach ASTM 1238 bei einer Temperatur von 125°C und einer Last von 325g, aufweist.

3. Schweißdraht nach Anspruch 1 oder 2, wobei das mindestens eine Polymer auf Basis eines Ethylen-Vinylacetat-Copolymers einen Vinylacetat-Gehalt von 15 Gew.-% bis 35 Gew.-%, bezogen auf das Gewicht des Ethylen-Vinylacetat-Copolymers aufweist.

4. Schweißdraht nach Anspruch 2 oder 3, wobei das mindestens eine Wachs ein natürliches Wachs ist, ausgewählt aus pflanzlichen Wachsen, tierischen Wachsen und Mineralwachsen und beliebigen Gemischen davon.

5. Schweißdraht nach Anspruch 4, wobei das mindestens eine natürliche Wachs ausgewählt ist aus Candelillawachs, Japanwachs, Carnaubawachs, Montanwachs und beliebigen Gemischen davon.

6. Schweißdraht nach einem oder mehreren der vorangehenden Ansprüche,
wobei der Schweißdraht zusätzlich Schellack aufweist.

7. Schweißdraht nach Anspruch 6, wobei der Schellack in einer Menge von 5 Gew.-% bis 15 Gew.-%, bezogen auf die Gesamtmenge aus dem mindestens einen Polymer auf Basis eines Ethylen-Vinylacetat-Copolymers und dem mindestens einen Wachs, in dem Schweißdraht vorhanden ist.

8. Schweißdraht nach einem oder mehreren der Ansprüche 1 bis 5, wobei der Schweißdraht eine Ummantelung auf Basis mindestens eines Schmelzklebers aufweist.

9. Schweißdraht nach Anspruch 8, wobei der Schmelzkleber ein Schmelzkleber auf Polyamid-Basis ist.

10. Schweißdraht nach Anspruch 8 oder 9, wobei der mindestens eine Schmelzkleber einen Schmelzindex von mindestens 200g/10min und nicht größer als 400g/10min, gemessen nach ASTM 1238 bei einer Temperatur von 125°C und einer Last von 325g, aufweist.

11. Schweißdraht nach einem oder mehreren der Ansprüche 8 bis 10, wobei die Ummantelung auf Basis mindestens eines Schmelzklebers eine Dicke von 0,05 mm bis 0,3 mm aufweist.

12. Schweißdraht nach einem oder mehreren der vorangehenden Ansprüche, wobei der Schweißdraht bei einem kreisförmigen Querschnitt einen Durchmesser, einschließlich einer gegebenenfalls vorhandenen Ummantelung auf Basis mindestens eines Schmelzklebers, von 2 mm bis 6 mm aufweist.

13. Schweißdraht nach einem oder mehreren der vorangegangenen Ansprüche, wobei der Schweißdraht gefärbt ist.

14. Verwendung eines Schweißdrahts nach einem oder mehreren der Ansprüche 1 bis 13 zum Verschweißen von flexiblen Flächengebilden.

15. Verwendung nach Anspruch 14, wobei die flexiblen Flächengebilde Boden- oder Wandbeläge sind.

16. Verwendung nach Anspruch 15, wobei die Boden- und Wandbeläge Linoleum-Boden- oder Wandbeläge sind.

17. Verwendung nach Anspruch 16, wobei die Linoleum-Boden- oder Wandbeläge ein Finish aufweisen.

18. Verwendung nach Anspruch 17, wobei das Finish auf Basis von nichtvernetzteen oder vernetztem Polyurethan- oder Acrylat- Homopolymeren und deren Copolymeren untereinander gebildet ist.

## Claims

1. A thermoplastic welding wire for welding flexible planar formations, comprising at least one polymer based on an ethylene-vinyl acetate copolymer and at least one wax, wherein the at least one polymer based on an ethylene-vinyl acetate copolymer is provided in the welding wire in a quantity of 40 wt.-% to 75 wt.-%, in relation to the total quantity of the at least one polymer based on an ethylene-vinyl acetate copolymer and the at least one wax, and the welding wire has a melt-flow index of 2 g/10 minutes to 150 g/10 minutes, measured according to ASTM 1238 at a temperature of 80°C and a load of 15 kg.

2. The welding wire according to Claim 1, wherein the at least one polymer based on an ethylene-vinyl acetate copolymer has a melt-flow index of 100 g/10 minutes to 830 g/10 minutes measured according to ASTM 1238 at a temperature of 125°C and a load of 325 g.

3. The welding wire according to Claim 1 or 2, wherein the at least one polymer based on an ethylene-vinyl acetate copolymer has a vinyl acetate content of 15 wt.-% to 35 wt.-%, in relation to the weight of the ethylene vinyl acetate copolymer.

4. The welding wire according to Claim 2 or 3, wherein the at least one wax is a natural wax, selected from vegetable waxes, animal waxes, and mineral waxes, and arbitrary mixtures thereof.

5. The welding wire according to Claim 4, wherein the at least one natural wax is selected from Candelilla wax, Japan wax, carnauba wax, montan wax, and arbitrary mixtures thereof.

6. The welding wire according to one or more of the preceding claims, wherein the welding wire additionally has shellac.

7. The welding wire according to Claim 6, wherein the shellac is provided in the welding wire in a quantity of 5 wt.-% to 15 wt.-%, in relation to the total quantity of the at least one polymer based on an ethylene-vinyl acetate copolymer and the at least one wax.

8. The welding wire according to one or more of Claims 1 through 5, wherein the welding wire has a sheath based on at least one hot-melt adhesive.

9. The welding wire according to Claim 8, wherein the hot-melt adhesive is a hot-melt adhesive based on polyamide.

10. The welding wire according to Claim 8 or 9, wherein the at least one hot-melt adhesive has a melt-flow index of at least 200 g/10 minutes and not greater than 400 g/10 minutes, measured according to ASTM 1238 at a temperature of 125°C and a load of 325 g

11. The welding wire according to one or more of Claims 8 through 10, wherein the sheath based on at least one hot-melt adhesive has a thickness of 0.05 mm to 0.3 mm.

12. The welding wire according to one or more of the preceding claims, wherein the welding wire, with a circular cross-section, has a diameter, including a possibly provided sheath based on at least one hot-melt adhesive, of 2 mm to 6 mm.

13. The welding wire according to one or more of the preceding claims, wherein the welding wire is colored.

14. A use of a welding wire according to one or more of Claims 1 through 13 for welding flexible planar formations.

15. The use according to Claim 14, wherein the flexible planar formations are floor or wall coverings.

16. The use according to Claims 15, wherein the floor and wall coverings are linoleum floor or wall coverings.

17. The use according to Claims 16, wherein the linoleum floor or wall coverings have a finish.

18. The use according to Claim 17, wherein the finish is produced on the basis of non-cross-linked or cross-linked polyurethane or acrylate homopolymers and their copolymers with one another.

## Revendications

1. Fil de soudure thermoplastique pour souder des structures planes flexibles, comprenant au moins un polymère à base d'un copolymère d'éthylène-acétate de vinyle et au moins une cire, au moins le polymère à base d'un copolymère d'éthylène-acétate de vinyle étant présent en une quantité de 40 % en poids à 75 % en poids par rapport à la quantité totale d'au moins le polymère à base d'un copolymère d'éthylène-acétate de vinyle et d'au moins une cire dans le fil de soudure, et le fil de soudure présentant un indice de fusion de 2 g/10 min à 150 g/10 min, mesuré selon la norme ASTM 1238 à une température de 80° C et sous une charge de 15 kg.

2. Fil de soudage selon la revendication 1, dans lequel au moins le polymère à base d'un copolymère d'éthylène-acétate de vinyle présente un indice de fusion de 100 g/10 min à 830 g/10 min, mesuré selon la norme ASTM 1238 à une température de 125° C et à une charge de 325 g.

3. Fil de soudure selon la revendication 1 ou 2, dans lequel au moins le polymère à base d'un copolymère d'éthylène-acétate de vinyle présente une teneur en acétate de vinyle de 15 % en poids à 35 % en poids par rapport au poids du copolymère d'éthylène-acétate de vinyle.

4. Fil de soudure selon la revendication 2 ou 3, dans lequel au moins une cire est une cire naturelle choisie parmi les cires végétales, les cires animales et les cires minérales et leurs mélanges quelconques.

5. Fil de soudure selon la revendication 4, dans lequel au moins une cire naturelle est choisie parmi la cire de candelilla, la cire du Japon, la cire de carnauba, la cire de lignite et leurs mélanges quelconques.

6. Fil de soudure selon une ou plusieurs des revendications précédentes, le fil de soudure présentant en outre une gomme laque.

7. Fil de soudure selon la revendication 6, dans laquelle la gomme laque est présente en une quantité de 5 % en poids à 15 % en poids par rapport à la quantité totale d'au moins le polymère à base d'un copolymère d'éthylène-acétate de vinyle et d'au moins la cire dans le fil de soudure.

8. Fil de soudure selon une ou plusieurs des revendications 1 à 5, le fil de soudure présentant une gaine à base d'au moins une colle thermoplastique.

9. Fil de soudure selon la revendication 8, dans lequel la colle thermoplastique est une colle thermoplastique à base de polyamide.

10. Fil de soudure selon la revendication 8 ou 9, dans lequel au moins une colle thermoplastique présente un indice de fusion d'au moins 200 g/10 min et inférieur à 400 g/10 min, mesuré selon la norme ASTM 1238 à une température de 125° C et à une charge de 325 g.

11. Fil de soudure selon une ou plusieurs des revendications 8 à 10, dans lequel la gaine à base d'au moins une colle thermoplastique présente une épaisseur de 0,05 mm à 0, 3 mm.

12. Fil de soudure selon une ou plusieurs des revendications précédentes, le fil de soudure présentant, avec une section circulaire, un diamètre comprenant une gaine éventuellement présente à base d'au moins une colle thermoplastique, de 2 mm à 6 mm.

13. Fil de soudure selon une ou plusieurs des revendications précédentes, le fil de soudure étant coloré.

14. Utilisation d'un fil de soudure selon une ou plusieurs des revendications 1 à 13 pour la soudure de structures planes flexibles.

15. Utilisation selon la revendication 14, dans laquelle les structures planes flexibles sont des revêtements de sol ou de mur.

16. Utilisation selon la revendication 15, dans laquelle les revêtements de sol ou de mur sont des revêtements de sol ou de mur en linoléum.

17. Utilisation selon la revendication 16, dans laquelle les revêtements de sol ou de mur en linoléum présentent un vernis.

18. Utilisation selon la revendication 17, dans laquelle le vernis est formé à base d'homopolymères de polyuréthane ou d'acrylate réticulés ou non réticulés et leurs copolymères.
